# EUROPÄISCHE PATENTSCHRIFT

(11) **EP 1 614 951 B1**
(45) Veröffentlichungstag und Bekanntmachung des Hinweises auf die Patenterteilung: **19.09.2012**
(21) Anmeldenummer: 05007493.9
(22) Anmeldetag: 06.04.2005
(51) Int. Cl.: F16L 41/02, B65D 77/06, F16L 41/08

(54) **Wandarmatur zur Bildung eines fluidführenden Anschlusses**
Wall fitting for forming a fluid-carrying connection
Raccord mural pour la formation de connection transportant des fluides

(30) Priorität: 09.07.2004 DE 102004033258
(43) Veröffentlichungstag der Anmeldung: 11.01.2006
(73) Patentinhaber: HYDAC FILTERTECHNIK GMBH, 66280 Sulzbach/Saar (DE)
(72) Erfinder: Wilkendorf, Werner, 66564 Ottweiler (DE)
(74) Vertreter: Bartels & Partner

(56) Entgegenhaltungen:
- JP-A- 7 158 797
- US-A- 4 300 698
- US-A- 4 504 535
- US-B1- 6 415 941

## Beschreibung

Die Erfindung bezieht sich auf eine Armatur zur Bildung eines fluidführenden Anschlusses an einer Öffnung einer aus Kunststoff gebildeten Wand eines Behälters, insbesondere Tanks, zur Aufnahme eines Fluides, insbesondere einer Hydraulikflüssigkeit, der am Rand der Öffnung in den Kunststoff der Wand des Behälters eingebettet und mit von der Außenseite des Behälters zugänglichen Befestigungsmitteln versehen ist, mittels denen ein Anschlussteil der Armatur am Verbindungskörper anbringbar ist, wobei der Verbindungskörper als metallischer Ringkörper ausgebildet ist, dessen Ringöffnung die Öffnung des Behälters fluchtend umgibt.

In Hydrosystemen werden zur Aufnahme von Hydraulikflüssigkeiten vielfach Kunststofftanks eingesetzt. Wegen der Möglichkeit der verhältnismäßig einfachen Formgebung, des geringen Gewichts und der Korrosionsbeständigkeit finden Kunststofftanks verbreitete Anwendung namentlich bei Hydrosystemen von Arbeitsmaschinen wie Baggern, Radladern und dergleichen.

Üblicherweise werden solche Tanks nach dem bekannten Rotationsform - oder einem Blasformverfahren hergestellt, wobei für größere Behälter, wie Tanks für Hydraulikflüssigkeiten, beispielsweise PE- oder PA-Kunststoffmaterial benutzt wird.

Den Vorteilen der Korrosionsbeständigkeit des geringen Gewichts und der leichten Formbarkeit steht bei Kunststofftanks jedoch der Nachteil gegenüber, dass die Herstellung fluidführender Anschlüsse an der Öffnung in der aus Kunststoff gebildeten Wand des Behälters oder Tanks Schwierigkeiten bereitet. Aufgrund der physikalischen Eigenschaften des Kunststoffmaterials besteht die Gefahr, dass durch Dichtungskräfte und Temperatureinflüsse Deformierungen am Öffnungsbereich stattfinden, die selbst dann, wenn aufwendige Dichtelemente zum Einsatz kommen, zu Undichtigkeiten zwischen Kunststofftank und Anbauteilen führen.

Eine Armatur der eingangs beschriebenen Art ist aus US 4,504,535 bekannt geworden. Die bekannte Armatur umfasst einen Verbindungskörper mit einem festen ringförmigen Basisteil aus Metall und einer festen, in axialer Richtung aus dem Basisteil vorstehenden Rippe. Bei der Befestigung bzw. Einbettung der Armatur in die Kunststoffwand wird der Verbindungskörper mittels Schrauben in einer Form gehalten und mit Kunststoffmaterial umgossen bzw. umspritzt. Nach Abschluss des Formgebungsschrittes verhindern das Basisteil und die Rippe, ein Schrumpfen und Verbiegen des aushärtenden Kunststoffmaterials. Hierbei wird der Verbindungskörper einschließlich der Rippe vollständig von Kunststoffmaterial umgeben, mit anderen Worten in die Kunststoffwand aufgenommen. An dem Basisteil sind Befestigungsmittel in Form von Schrauben bzw. Schraubenlöchern vorgesehen.

Durch den die Öffnung des Behälters umgebenden, in den Kunststoff der Wand des Behälters eingebetteten Verbindungskörper steht ein Verstärkungselement zur Verfügung, das mit den Befestigungsmitteln zum Anbringen des Anschlußteiles versehen ist. Somit werden die am Anschluß wirkenden Belastungen wie Befestigungskraft, Dichtungskraft, dynamische (Schwingungen) und thermische Einflüsse nicht unmittelbar am Kunststoffmaterial der Behälterwand wirksam, sondern an dem ein Verstärkungselement bildenden Verbindungskörper. Das Einbetten eines Verbindungskörpers, der aus einem im Hinblick auf die betrieblichen Belastungen zweckmäßig gewählten Werkstoff gefertigt ist, vorzugsweise aus Metall oder einem duroplastischen Kunststoff hoher Dauerfestigkeit und Wärmebeständigkeit, bietet einen sicheren Schutz gegen Deformation des Kunststoffmaterials der Behälterwand, so dass ein betriebssicherer, leckagefreier Anschluß gewährleistet ist.

Ausgehend von diesem Stand der Technik stellt sich die Erfindung die Aufgabe, eine Armatur zur Verfügung zu stellen, die eine gute Halterung des Verbindungskörpers in der Kunststoffwand einhergehend mit einer guten Sicherung gegen Belastungen gewährleistet.

Erfindungsgemäß ist diese Aufgabe durch eine Armatur gelöst, die die Merkmale des Patentanspruches 1 in seiner Gesamtheit aufweist.

Eine besonders innige Verbindung zwischen Ringkörper und der Kunststoffwand des Behälters ergibt sich dadurch, dass die der Innenseite des Behälters zugewandte Seite des Ringkörpers eine Mehrzahl taschenartiger Vertiefungen aufweist. In vorteilhafter Weise kann der Verbindungskörper durch ein Einlegeteil gebildet sein, das beim Rotationsformen des Kunststoffbehälters an der beim Formvorgang gebildeten Öffnung in die Wand des Behälters eingeformt ist. Wenn der Ringkörper beim Rotationsformen des Behälters als Einlegeteil eingeformt wird, ergibt sich durch das in die taschenartigen Vertiefungen eintretende Kunststoffmaterial eine Verzahnung des Ringkörpers mit der Behälterwand und eine entsprechend gute Sicherung des Ringkörpers gegen Belastungen.

Bei kreisrunder Öffnung des Behälters ist der Verbindungskörper als metallischer Ringkörper ausgebildet, dessen Ringöffnung die Öffnung des Behälters fluchtend umgibt. Dabei kann es sich um einen aus einer Aluminiumlegierung durch Spritzgießen, Fließpressen oder dergleichen hergestellten Ringkörper handeln, der vorzugsweise so gestaltet ist, dass er an seiner der Behälteraußenseite zugeordneten Seite eine ebene Ringfläche aufweist. Diese kann mit der Außenseite der die Öffnung umgebenden Wand des Behälters bündig sein. Alternativ kann der Ringkörper in die Wand des Behälters so eingeformt sein, dass der Ringkörper in der Behälterwand leicht versenkt ist.

Als Befestigungsmittel für die Anbringung beispielsweise eines Befestigungsflansches des betreffenden Abschlußteiles kann der Ringkörper Bohrungen für Halteschrauben aufweisen.

Vorzugsweise sind die Bohrungen als Sackbohrungen mit Innengewinde ausgebildet und in regelmäßigen Winkelabständen verteilt am Umfangsrand des Ringkörpers vorgesehen.

Nachstehend ist die Erfindung anhand eines in der Zeichnung dargestellten Ausführungsbeispieles im einzelnen erläutert. Es zeigen:
- Fig. 1: eine abgebrochen und teils schematisch vereinfacht gezeichnete perspektivische Darstellung eines Teiles der Oberseite eines Kunststofftanks mit einem Ausführungsbeispiel der erfindungsgemäßen Armatur, die zur Bildung eines Anschlusses für einen sogenannten Tank-Top-Filter dient;
- Fig. 2: eine Draufsicht des Ringkörpers des in Fig. 1 gezeigten Ausführungsbeispieles der erfindungsgemäßen Armatur;
- Fig. 3 und 4: Schnitte entsprechend der Schnittlinien III-II bzw. IV-IV von Fig. 2;
- Fig. 5: eine Unteransicht des Ringkörpers von Fig. 2;
- Fig. 6: eine perspektivische Schrägansicht mit Blick auf die in Fig. 5 gezeigte Unterseite des Ringkörpers, demgegenüber in etwas kleinerem Maßstab gezeichnet, und
- Fig. 7: einen abgebrochen und vergrößert gezeichneten Teilschnitt der Oberseite eines Kunststofftanks mit in die Tankwand versenkt eingeformtem Ringkörper.

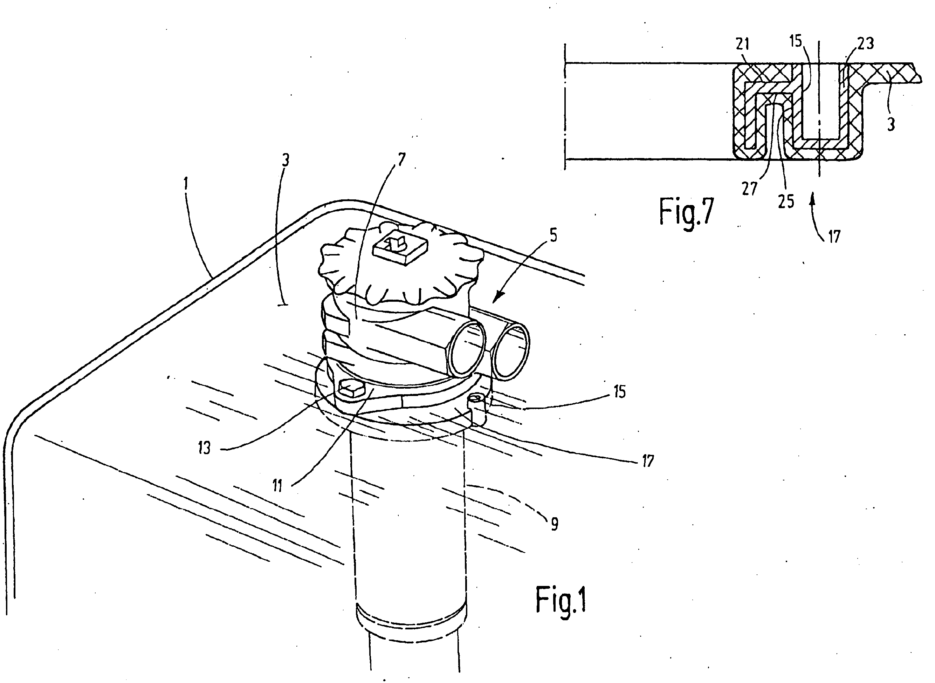

Fig. 1 zeigt einen Teil der Oberseite eines Behälters in Form eines Kunststofftanks 1, der nach dem bekannten Rotationsformverfahren (vgl. Schaab/Stoeckhert, "Kunststoff Maschinenführer", Seite 561-564) aus einem für größere Behälter geeigneten Kunststoffwerkstoff hergestellt ist, wobei an der Oberseite eine Tanköffnung beim Vorgang des Rotationsformens gebildet ist. An der Öffnung in der Kunststoffwand 3 befindet sich eine als Ganzes mit 5 bezeichnete Armatur für die fluidführende, leckagefreie Verbindung mit einem Anschlußteil, bei dem es sich beim gezeigten Beispiel um den Anschlußkopf 7 eines Tank-Top-Filters handelt, dessen Filterelement 9 durch die Öffnung hindurch ins Innere des Tanks 1 ragt. Der Anschlußkopf 7 weist einen Befestigungsflansch 11 auf, der mittels zweier Halteschrauben 13, von denen in Fig. 1 nur eine sichtbar ist, am Tank 1 angebracht ist.

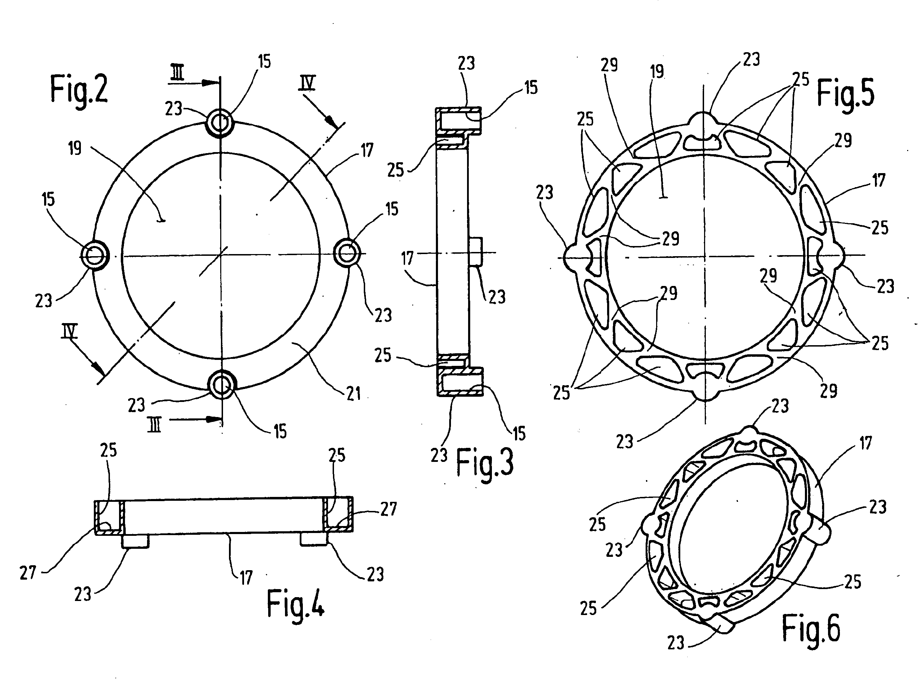

Die den Befestigungsflansch 11 durchgreifenden Halteschrauben 13 sind in Sackbohrungen 15 mit Innengewinde eingeschraubt, die an einem Verbindungskörper vorgesehen sind, der in Form eines Ringkörpers 17 ausgebildet ist, dessen nähere Einzelheiten in Fig. 2 bis 6 dargestellt sind. Der beim vorliegenden Ausführungsbeispiel aus einer Aluminiumlegierung gefertigte Ringkörper 17 ist beim Rotationsformen des Tanks 1 als Einlegeteil so eingeformt, dass die kreisrunde Ringöffnung 19 die Tanköffnung bildet.

Wie Fig. 2 bis 6 deutlich zeigen, weist der Ringkörper 17 an seiner Oberseite, die bündig zur Außenseite der Kunststoffwand 3 des Tanks 1 eingebettet ist, eine ebene Ringfläche 21 auf, die lediglich durch vier in Winkelabständen von 90° angeordnete, kreiszylindrische Zapfen 23 unterbrochen ist, die über die Ringfläche 21 axial leicht vorstehend am Umfangsrand des Ringkörpers 17 so gelegen sind, dass sie teilweise auch radial über den Umfangsrand hinaus ragen. Wie Fig. 1 entnehmbar ist, sind von den vier Sackbohrungen 15 am Ringkörper 17 lediglich zwei Sackbohrungen 15 für den Eingriff von Halteschrauben 13 genutzt.

Wie am deutlichsten aus Fig. 4 bis 6 entnehmbar ist, sind in der Unterseite des Ringkörpers 17 taschenartige Vertiefungen 25 ausgebildet, die in Fig. 5 und 6 nicht sämtliche beziffert sind, jeweils einen ebenen Boden 27 (siehe Fig. 4) aufweisen und eine Tiefe besitzen, die, wie am besten aus Fig. 4 zu ersehen ist, mehr als drei Viertel der axial gemessenen Dicke des Ringkörpers 17 beträgt. Wie am besten aus Fig. 5 zu ersehen ist, sind die Vertiefungen 25 in Aufeinanderfolge etwa mittig zwischen jeweils unvertieftem Außenrand des Ringkörpers und unvertieftem Innenrand des Ringkörpers gelegen. Die Vertiefungen 25 besitzen, mit Ausnahme der im Bereich der Zapfen 23 der Sackbohrungen 15 gelegenen Ausnehmungen, jeweils näherungsweise einen dreieckförmigen Umriß und sind hintereinander so angeordnet, dass zwischen benachbarten Vertiefungen 25 nicht vertiefte Bereiche des Ringkörpers 17 in Form von Rippen 29 verbleiben, die sich zwischen Ringöffnung 19 und dem Umfangsrand des Ringkörpers 17 erstrekken, wobei aufeinanderfolgende Rippen 29 in jeweils entgegengesetzter Richtung zueinander schräg verlaufen.

Zur Bildung der Abdichtung zwischen Ringkörper 17 und Anschlußteil kann die ebene Ringfläche 21 im Bereich zwischen Ringöffnung 19 und den Zapfen 23 am Ringkörper 17 als Dichtfläche vorgesehen sein, an der beispielsweise eine Axialdichtung anliegt. Bei dem in Fig. 1 gezeigten Beispiel erfolgt die Abdichtung zwischen Ringkörper 17 und Befestigungsflansch 11 des Anschlußkopfes 7 durch eine nicht gezeigte Radialdichtung zwischen Befestigungsflansch 11 und Innenseite der Ringöffnung 19 des Ringkörpers 17.

Wie Fig. 7 zeigt, braucht der Ringkörper 17 in die Tankwand 3 nicht so eingeformt zu sein, dass die Ringfläche 21 mit der Außenseite der Wand 3 bündig ist. Der Ringkörper 17 kann in der Wand 3 versenkt sein, wobei, wie gezeigt, die Oberseite der Zapfen 23 mit den Sackbohrungen 15 mit der Außenseite der Wand 3 bündig sein kann. Wie Fig. 7 ebenfalls zeigt, ist die Außenseite des Ringkörpers 17 vollständig vom Kunststoffmaterial der Wand 3 umschlossen, das auch in die Vertiefungen 25 eingedrungen ist.

## Patentansprüche

1. Armatur (5) zur Bildung eines fluidführenden Anschlusses an einer Öffnung einer aus Kunststoff gebildeten Wand (3) eines Behälters (1), insbesondere Tanks, zur Aufnahme eines Fluides, insbesondere einer Hydraulikflüssigkeit, mit einem die Öffnung des Behälters (1) umgebenden Verbindungskörper (17), der am Rand der Öffnung in den Kunststoff der Wand (3) des Behälters (1) eingebettet und mit von der Außenseite des Behälters (1) zugänglichen Befestigungsmitteln (15) versehen ist, mittels denen ein Anschlußteil (11) der Armatur (5) am Verbindungskörper (17) anbringbar ist, wobei der Verbindungskörper als metallischer Ringkörper (17) ausgebildet ist, dessen Ringöffnung (19) die Öffnung des Behälters (1) fluchtend umgibt, **dadurch gekennzeichnet, dass** die der Innenseite des Behälters (1) zugewandte Seite des Ringkörpers (17) eine Mehrzahl taschenartiger Vertiefungen (25) aufweist.

2. Armatur nach Anspruch 1, **dadurch gekennzeichnet, dass** der Verbindungskörper (17) durch ein Einlegeteil gebildet ist, das beim Rotationsformen des Kunststoffbehälters (1) an der beim Formvorgang gebildeten Öffnung in die Wand (3) des Behälters (1) eingeformt ist.

3. Armatur nach Anspruch 1 oder 2, **dadurch gekennzeichnet, dass** der Ringkörper (17) an der der Behälteraußenseite zugeordneten Seite eine ebene Ringfläche (21) aufweist.

4. Armatur nach Anspruch 3, **dadurch gekennzeichnet, dass** die Ringfläche (21) mit der die Öffnung umgebenden Wand (3) des Behälters (1) zumindest näherungsweise bündig ist.

5. Armatur nach Anspruch 3 oder 4, **dadurch gekennzeichnet, dass** zumindest ein Teil der ebenen Ringfläche (21) des Ringkörpers (17) als Dichtfläche, vorzugsweise für die Anlage eines Dichtelementes, zur Bildung einer Abdichtung gegenüber dem Anschlußteil (11) ausgebildet i st.

6. Armatur nach einem der Ansprüche 1 bis 5, **dadurch gekennzeichnet, dass** der Ringkörper (17) als Befestigungsmittel Bohrungen (15) für Halteschrauben (13) zur Anbringung eines Befestigungsflansches des Anschlußteiles (11) aufweist.

7. Armatur nach Anspruch 6, **dadurch gekennzeichnet, dass** die Bohrungen als Sackbohrungen (15) mit Innengewinde ausgebildet und in regelmäßigen Winkelabständen verteilt am Umfangsrand des Ringkörpers (17) vorgesehen sind.

8. Armatur nach Anspruch 7, **dadurch gekennzeichnet, dass** die Sackbohrungen (15) in zylindrischen, am Ringkörper (17) axial vorstehenden Zapfen (23) ausgebildet sind.

9. Armatur nach einem der Ansprüche 1 bis 8, **dadurch gekennzeichnet, dass** die Tiefe der taschenartigen Vertiefungen (25) zumindest drei Viertel der axialen Dicke des Ringkörpers (17) beträgt.

10. Armatur nach Anspruch 9, **dadurch gekennzeichnet, dass** der Umriß zumindest eines Großteiles der taschenartigen Vertiefungen (25) näherungsweise dreieckförmig ist und dass die Vertiefungen (25) am Ringkörper (17) in solcher Aufeinanderfolge angeordnet sind, dass zwischen benachbarten Vertiefungen (25) nicht vertiefte Bereiche des Ringkörpers (17) in Form von Rippen (29) gebildet sind, wobei aufeinanderfolgende Rippen (29) in jeweils entgegengesetzter Richtung zueinander schräg verlaufen.

11. Armatur nach Anspruch 10, **dadurch gekennzeichnet, dass** der Bereich der taschenartigen Vertiefungen (25) mittig zwischen einem unvertieften Außenrand des Ringkörpers (17) und einem unvertieften Innenrand des Ringkörpers (17) gelegen ist.

## Claims

1. A fitting (5) for formation of a fluid-conveying connection on an opening in a wall (3), made of plastic, of a container (1), in particular a tank, for receiving a fluid, in particular a hydraulic fluid, having a connecting element (17) surrounding the opening of the container (1) and which at the edge of the opening is embedded into the plastic of the wall (3) of the container (1) and is provided with fastening means (15) accessible from the outer side of the container (1) and by means of which a connecting part (11) of the fitting (5) can be attached to the connecting element (17), the connecting element being in the form of a metallic annular element (17) the annular opening (19) of which is in alignment with the opening in the container (1), **characterised in that** the side of the annular element (17) facing the interior of the container (1) has a plurality of pocket-like recesses (25).

2. The fitting according to Claim 1, **characterised in that** the connecting element (17) is in the form of an inserted part which is moulded in rotomoulding of the plastic container (1) into the wall (3) of the container (1) formed in the moulding process.

3. The fitting according to Claim 1 or 2, **characterised in that** the annular element (17) has a level annular surface (12) on the side associated with the outer side of the container.

4. The fitting according to Claim 3, **characterised in that** the annular surface (21) is at least approximately flush with the wall (3) of the container (1) surrounding the opening.

5. The fitting according to Claim 3 or 4, **characterised in that** at least part of the level annular surface (21) of the annular element (17) is configured as a sealing surface, preferably for mounting of a sealing element, for formation of a seal opposite the connection part (11).

6. The fitting according to any of Claims 1 to 5, **characterised in that** the annular element (17) has bore holes (15) for retaining screws (13) as fastening means for attaching a fastening flange of the connection part (11).

7. The fitting according to Claim 6, **characterised in that** the bore holes are configured as blind bore holes (15) with interior threading and are provided at regular angular distances, distributed over the circumferential edge of the annular element (17).

8. The fitting according to Claim 7, **characterised in that** the blind bore holes (15) are configured as cylindrical pins (23) projecting axially from the annular element (17).

9. The fitting according to any of Claims 1 to 8, **characterised in that** the depth of the pocket-like recesses (25) is at least three quarters of the axial thickness of the annular element (17).

10. The fitting according to Claim 9, **characterised in that** the outline of at least a greater part of the pocket-like recesses (25) is approximately triangular, and that the recesses (25) on the annular element (17) are positioned in sequence such that non-recessed regions of the annular element (17) in the form of ribs (29) are formed between adjacent recesses (25), successive ribs (29) extending obliquely in the opposite direction relative to each other.

11. The fitting according to Claim 10, **characterised in that** the region of the pocket-like recesses (25) is positioned centrally between an unrecessed outer edge of the annular element (17) and an unrecessed inner edge of the annular element (17).

## Revendications

1. Raccord (5) pour la formation d'une connexion fluidique sur une ouverture d'une paroi (3) en matière plastique d'un récipient (1), notamment d'une cuve, pour la réception d'un fluide, notamment d'un liquide hydraulique comprenant un corps (17) de liaison entourant l'ouverture du récipient (1), incorporé au bord de l'ouverture dans la matière plastique de la paroi (3) du récipient (1) et pourvu de moyens (15) de fixation accessibles par le côté extérieur du récipient (1), au moyen desquels une partie (11) de connexion du raccord (5) peut être montée sur le corps (17) de liaison, le corps de liaison étant constitué sous la forme d'un corps (17) annulaire métallique dont l'ouverture (19) annulaire entoure en alignement l'ouverture du récipient (1), **caractérisé en ce que** le côté du corps (17) annulaire, tourné vers le côté intérieur du récipient (1), comporte une multiplicité de cavités (25) de type en poche.

2. Raccord suivant la revendication 1, **caractérisé en ce que** le corps (17) de liaison est formé par une partie d'insertion qui, pour des formes de révolution du récipient (1) en matière plastique, est incorporée à l'ouverture formée lors de l'opération de moulage dans la paroi (3) du récipient (1).

3. Raccord suivant la revendication 1 ou 2, **caractérisé en ce que** le corps (17) annulaire a, du côté associé au côté extérieur du récipient, une surface (21) annulaire plane.

4. Raccord suivant la revendication 3, **caractérisé en ce que** la surface (21) annulaire est au moins approximativement à affleurement avec la paroi (3) du récipient (1) entourant l'ouverture.

5. Raccord suivant la revendication 3 ou 4, **caractérisé en ce qu'**au moins une partie de la surface (21) annulaire plane du corps (17) annulaire est constituée en surface d'étanchéité, de préférence pour l'application d'un élément d'étanchéité pour la formation d'une étanchéité par rapport à la partie (11) de connexion.

6. Raccord suivant l'une des revendications 1 à 5, **caractérisé en ce que** le corps (17) annulaire a comme moyen de fixation des trous (15) pour des vis (13) de maintien pour le montage d'une bride de fixation de la partie (11) de connexion.

7. Raccord suivant la revendication 6, **caractérisé en ce que** les trous sont constitués en trou (15) borgne à taraudage et sont répartis à des distances angulaires régulières sur le bord du pourtour du corps (17) annulaire.

8. Raccord suivant la revendication 7, **caractérisé en ce que** les trous (15) borgnes sont constitués sous la forme de tenons (23) cylindriques en saillie axialement sur le corps (17) annulaire.

9. Raccord suivant l'une des revendications 1 à 8, **caractérisé en ce que** la profondeur des cavités (25) de type à poche représente au moins les trois quarts de l'épaisseur axiale du corps (17) annulaire.

10. Raccord suivant la revendication 9, **caractérisé en ce que** le contour d'au moins une grande partie des cavités (25) de type à poche est à peu près triangulaire et **en ce que** les cavités (25) sont disposées sur le corps (17) annulaire en un ordre tel qu'entre les cavités (25) voisines sont formées des zones non évidées du corps (17) annulaire sous forme de nervure (29), des nervures (29) successives s'étendant de manière inclinées les unes par rapport aux autres dans une direction respectivement opposée.

11. Raccord suivant la revendication 10, **caractérisé en ce que** la zone des cavités (25) de type à poche est disposée au milieu entre un bord extérieur non évidé du corps (17) annulaire et un bord intérieur non évidé du corps (17) annulaire.
